# EUROPÄISCHE PATENTSCHRIFT

(11) **EP 1 990 555 B1**
(45) Veröffentlichungstag und Bekanntmachung des Hinweises auf die Patenterteilung: **09.11.2011**
(21) Anmeldenummer: 08103350.8
(22) Anmeldetag: 03.04.2008
(51) Int. Cl.: F16D 1/10, F16B 37/12

(54) **Bohrungsverzahnung zur Verdrehsicherung von Gewindeeinsätzen**
Splined connection to rotationally secure screw thread components
Engrènement de forage destiné au blocage de rotation d'inserts filetés

(30) Priorität: 08.05.2007 DE 102007022468
(43) Veröffentlichungstag der Anmeldung: 12.11.2008
(73) Patentinhaber: Rolls-Royce Deutschland Ltd & Co KG, 15827 Blankenfelde-Mahlow (DE)
(72) Erfinder: Mielke, Rainer, 61440 Oberursel (DE)

(56) Entgegenhaltungen:
- EP-A1- 1 741 959
- DE-A1- 19 506 517
- US-A- 3 921 280
- US-A- 4 067 371

## Beschreibung

Die Erfindung betrifft eine Bohrungsverzahnung zur Verdrehsicherung, mit einer aus mehreren Zähnen bestehenden Außenverzahnung versehenen Gewindeeinsatz, insbesondere für Bauteile aus harten, spröden Werkstoffen. Eine solche Bohrungsverzahnung ist aus US-A-3,921,280.

Es ist bekannt, in einem Bauteil, zum Beispiel einem Gehäuse, vorzusehende Gewindeanschlüsse mittels eines in einer Bohrung fixierten Gewindeeinsatzes herzustellen. Bei einer Beschädigung des Gewindes muss dann lediglich der Gewindeeinsatz ausgetauscht werden und es kann wieder die gleiche Gewindegröße verwendet werden. Um den Gewindeeinsatz gegen Verdrehen zu sichern, wird in der betreffenden Bohrung des betreffenden Bauteils mit einem Taumelwerkzeug (wobble broaching oder rotary broaching) durch allmähliches Eindrücken eine Innenverzahnung (Bohrungsverzahnung, Sternchenverzahnung) hergestellt, in die eine in der Form identische Außenverzahnung des Gewindeeinsatzes eingreift. Die Herstellung der Bohrungsverzahnung bereitet jedoch bei - beispielsweise im Triebwerksbau benutzten - harten Werkstoffen wie zum Beispiel Inconel 718 oder Titanaluminid insofern Schwierigkeiten, als an dem Werkstück Oberflächenbeschädigungen und Risse entstehen können und das Werkzeug zudem derart hoch beansprucht wird, dass die Verzahnung nur unvollständig ausgebildet ist oder zumindest deren Maßhaltigkeit nicht gewährleistet ist und das Werkzeug zudem einem so starken Verschleiß unterliegt, dass es schon nach einer Anwendung ausgetauscht werden muss. Bei der Erzeugung der Bohrungsverzahnung im Taumelverfahren kann es zudem am unteren Ende der verzahnten Bohrung zur Spanbildung kommen. Da sich der Span in das Gewinde eindrücken kann, ist dessen mühsame Entfernung, die wiederum zur Rissbildung führen kann, erforderlich. Die Herstellung der Verzahnung mit speziellen Gießverfahren ist ebenfalls nicht möglich, da das Gussgefüge rissinitiierend wirkt und daher zu einer verminderten Lebensdauer führt.

Der Erfindung liegt die Aufgabe zugrunde, die Bohrungsverzahnung in aus harten, spröden Werkstoffen bestehenden Bauteilen zur Sicherung der Gewindeeinsätze gegen Verdrehen so auszuführen, dass bei geringem Werkzeugverschleiß deren vollständige Ausbildung und Maßhaltigkeit ohne Werkstückschädigung gewährleistet ist.

Erfindungsgemäß wird die Aufgabe mit einer gemäß den Merkmalen des Patentanspruchs 1 ausgebildeten Bohrungsverzahnung zur Verdrehsicherung gelöst.

Der Kern der Erfindung besteht darin, dass die Bohrungsverzahnung aus durch Tauch- oder Umfangsfräsen erzeugten kreisbogenförmigen Ausnehmungen besteht, in die mindestens jeweils zwei Zähne des Gewindeeinsatzes formschlüssig eingreifen. Die Kreisbogenverzahnung kann auch in harten, spröden Werkstoffen, wie beispielsweise dem im Triebwerksbau eingesetzten Titanaluminid, maßgenau und ohne Schädigung des Werkstücks sowie - im Vergleich zu dem bekannten Taumelverfahren - mit geringem Werkzeugverschleiß hergestellt werden.

Vorzugsweise kann die Kreisbogenverzahnung so ausgebildet sein, dass jeweils bis zu vier Zähne des Gewindeeinsatzes in eine kreisbogenförmige Ausnehmung eingreifen. Wenn die Anzahl der Zähne nicht ein ganzzahliges Vielfaches der Ausnehmungen ist, kann mindestens eine der Ausnehmungen auch weiter oder enger ausgebildet sein, so dass möglichst viele Zähne des Gewindeeinsatzes mit der Kreisbogenverzahnung in formschlüssigem Eingriff stehen. Das untere Ende der kreisbogenförmigen Ausnehmungen ist vorzugsweise radial bogenförmig auslaufend ausgeführt.

Die erfindungsgemäße Kreisbogenverzahnung wird vorteilhaft bei Bauteilen aus harten Werkstoffen und hochwarmfesten Legierungen und bei der Verwendung dünnwandiger Gewindeeinsätze im Triebwerksbau benutzt.

Ein Ausführungsbeispiel der Erfindung wird anhand der Zeichnung näher erläutert. Es zeigen:
- Fig. 1: einen Horizontalschnitt eines in einer Bohrung einer Gehäusewand angeordneten Gewindeeinsatzes; und
- Fig. 2: eine Schnittansicht längs der Linie AA in Fig. 1

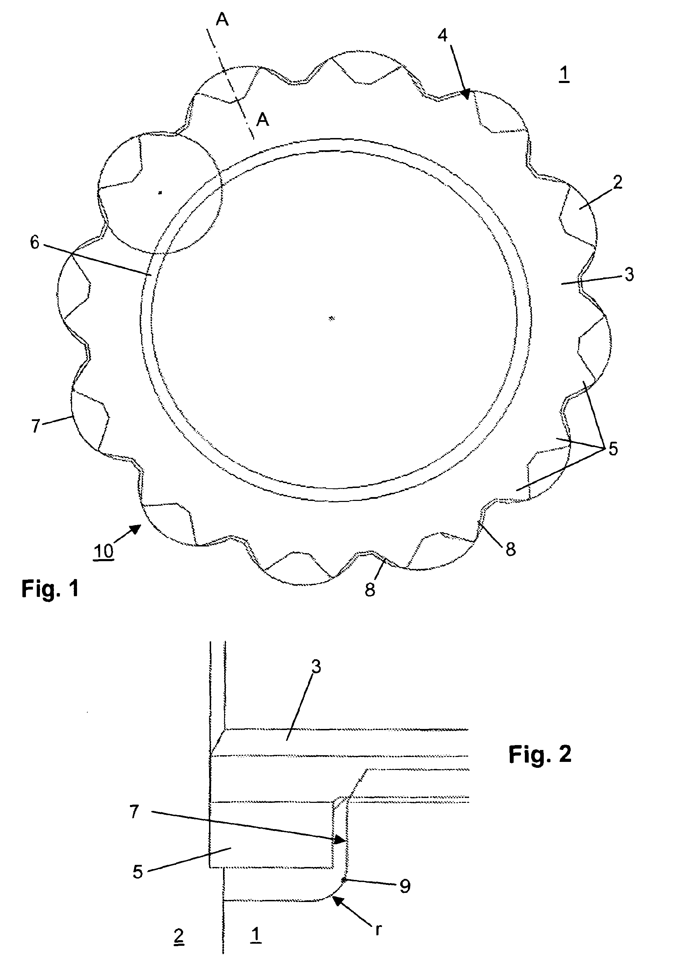

In einem aus Titanaluminid bestehenden Gehäuse 1 befindet sich eine Bohrung 2, in die ein Gewindeeinsatz 3 eingefügt ist. Der Gewindeeinsatz 3 weist am Außenumfang eine Verzahnung 4 mit einer geraden Anzahl Zähne 5 sowie ein Innengewinde 6 auf. In einen Teilbereich der Bohrung 2 sind am Innenumfang kreisbogenförmige Ausnehmungen 7 eingeformt, die so dimensioniert sind, dass jeweils zwei Zähne 5 in einer Ausnehmung 7 aufgenommen werden und die Außenflanken 8 der beiden benachbarten Zähne 5 zumindest teilweise an der Kreisbogenfläche der betreffenden Ausnehmung 7 anliegen. Wie Fig. 2 zeigt ist die Ausnehmung an ihrem Grund in radialer Richtung mit einem Radius r auslaufend ausgebildet, um so einen bogenförmigen Auslauf 9 zur Verminderung von Lastspitzen bei Drehmomentaufnahme zu bilden.

Die Kreisbogenverzahnung 10 aus an der Innenfläche der Bohrung 2 aneinandergereihten kreisbogenförmigen Ausnehmungen 7 mit am Grund bogenförmigem Auslauf 9 können bei dem hier verwendeten spröden, harten Werkstoff durch Tauchfräsen maßhaltig und ohne Beschädigung oder Rissbildung an der Oberfläche hergestellt werden. Eine Spanbildung mit den daraus resultierenden nachteiligen Folgen tritt nicht auf. Zum ersten Mal können in Bauteile aus spröden Werkstoffen, wie beispielsweise Titanaluminid, dünnwandige Gewindeeinsätze eingesetzt werden, die bei ausreichend langer Lebensdauer in der kreisbogenförmigen Verzahnung sicher gehalten sind.

Bei einer ungeraden Zähnezahl des Gewindeeinsatzes ist eine der kreisbogenförmigen Ausnehmungen so dimensioniert, dass diese drei Zähne aufnehmen kann. Prinzipiell kann die kreisbogenförmige Ausnehmung 7 auch drei oder vier aufeinanderfolgende Zähne 5 einschließen.

### Bezugszeichenliste

- 1: Gehäuse, Bauteil
- 2: Bohrung in 1
- 3: Gewindeeinsatz
- 4: Verzahnung v. 3
- 5: Zähne v. 4
- 6: Innengewinde v. 3
- 7: Kreisbogenförmige Ausnehmung
- 8: Außenflanken v. 5
- 9: Bogenförmiger Auslauf v. 7
- 10: Kreisbogenverzahnung in 2

## Patentansprüche

1. Bohrungsverzahnung zur Verdrehsicherung, mit einer aus mehreren Zähnen (5) bestehenden Außenverzahnung (4) versehenen Gewindeeinsatz (3), insbesondere für Bauteile aus harten, spröden Werkstoffen, **gekennzeichnet durch** eine Kreisbogenverzahnung (10) aus **durch** Tauch- oder Umfangsfräsen hergestellten kreisbogenförmigen Ausnehmungen (7), die jeweils mindestens zwei Zähne (5) der Außenverzahnung (4) des Gewindeeinsatzes (3) aufnehmen.

2. Bohrungsverzahnung nach Anspruch 1, **dadurch gekennzeichnet, dass** bis zu vier Zähne (5) in einer kreisbogenförmigen Ausnehmung (7) aufgenommen sind.

3. Bohrungsverzahnung nach Anspruch 1 oder 2, **dadurch gekennzeichnet, dass**, wenn die Anzahl der Zähne (5) nicht ein ganzzahliges Vielfaches der Anzahl der Ausnehmungen (7) ist, mindestens eine Ausnehmung (7) größer oder kleiner als die übrigen dimensioniert ist, um sämtliche Zähne (5) in den Ausnehmungen (7) unterzubringen.

4. Bohrungsverzahnung nach Anspruch 1, **dadurch gekennzeichnet, dass** die Kreisbogenfläche der Ausnehmungen (7) mindestens einen Teil der Außenflanken (8) der jeweils eingeschlossenen Zähne (5) kontaktiert.

5. Bohrungsverzahnung nach Anspruch 1, **dadurch gekennzeichnet, dass** die Ausnehmungen (7) einen radialen bogenförmigen Auslauf (9) aufweisen.

## Claims

1. Bore serration for locking an externally serrated threaded insert (3) against rotation, with the external serration (4) including several teeth (5), more particularly for use with components made of hard, brittle materials, **characterized by** a circular arc serration (10) consisting of circular arc recesses (7) produced by plunge or circumferential milling, and with each of the recesses accommodating at least two teeth (5) of the external serration (4) of the threaded insert (3).

2. Bore serration in accordance with Claim 1, **characterized in that** up to four teeth (5) are accommodated in one circular arc recess (7).

3. Bore serration in accordance with Claim 1 or 2, **characterized in that** at least one recess (7) is larger or smaller than the others, to accommodate all teeth (5) in the recesses (7), if the number of teeth (5) is not an integral multiple of the number of recesses (7).

4. Bore serration in accordance with Claim 1, **characterized in that** the circular arc surface of the recesses (7) contacts at least part of the outer flanks (8) of the teeth (5) included in the respective case.

5. Bore serration in accordance with Claim 1, **characterized in that** the recesses (7) feature a radial arcuate runout (9).

## Revendications

1. Denture de forure pour assurer la sécurité antirotation d'une douille taraudée (3) pourvue d'une denture extérieure (4) constituée de plusieurs dents (5), en particulier pour composants faits de matériaux durs et cassants, **caractérisée par** une denture en arc de cercle (10) constituée d'évidements en arc de cercle (7) façonnés par fraisage en plongée ou par fraisage circonférentiel, qui logent respectivement au moins deux dents (5) de la denture extérieure (4) de la douille taraudée (3).

2. Denture de forure selon la revendication n° 1, **caractérisée en ce que** jusqu'à quatre dents (5) sont logées dans un évidement en arc de cercle (7).

3. Denture de forure selon la revendication n° 1 ou n° 2, **caractérisée en ce que** quand le nombre de dents (5) n'est pas un multiple entier du nombre d'évidements (7), au moins un évidement (7) est dimensionné plus grand ou plus petit que les autres afin d'insérer toutes les dents (5) dans les évidements (7).

4. Denture de forure selon la revendication n° 1, **caractérisée en ce que** la face en arc de cercle des évidements (7) entre en contact avec au moins une partie des flancs extérieurs (8) des dents (5) respectivement incluses.

5. Denture de forure selon la revendication n° 1, **caractérisée en ce que** les évidements (7) présentent une sortie (9) radiale et arquée.
